# EUROPÄISCHE PATENTSCHRIFT

(11) **EP 4 625 284 B1**
(45) Veröffentlichungstag und Bekanntmachung des Hinweises auf die Patenterteilung: **11.02.2026**
(21) Anmeldenummer: 24166193.3
(22) Anmeldetag: 26.03.2024
(51) Int. Cl.: G06Q 10/08, G05D 1/00, G06V 20/52

(54) **SICHERHEITSSYSTEMVERBUND ZUR ÜBERWACHUNG EINES BEREICHS UND EIN VERFAHREN ZUR ÜBERWACHUNG EINES SOLCHEN BEREICHS**
SECURITY SYSTEM COMBINATION FOR MONITORING AN AREA AND A METHOD FOR MONITORING SUCH AN AREA
SYSTÈME COMPOSITE DE SÉCURITÉ POUR SURVEILLER UNE ZONE ET PROCÉDÉ DE SURVEILLANCE D'UNE TELLE ZONE

(43) Veröffentlichungstag der Anmeldung: 01.10.2025
(73) Patentinhaber: SICK AG, 79183 Waldkirch (DE)
(72) Erfinder: Hammes, Markus, 79117 Freiburg (DE); Sigmund, Jörg, 79341 Kenzingen (DE); Mayer, Nikolaus, 79110 Freiburg (DE); Müller, Angelina, 79114 Freiburg (DE)
(74) Vertreter: Manitz Finsterwald Patent- und Rechtsanwaltspartnerschaft mbB

(56) Entgegenhaltungen:
- DE-A1- 102017 222 966
- US-A1- 2019 196 480
- US-A1- 2022 126 864
- HATA ALBERTO ET AL: "AI-based Safety Analysis for Collaborative Mobile Robots", 2019 24TH IEEE INTERNATIONAL CONFERENCE ON EMERGING TECHNOLOGIES AND FACTORY AUTOMATION (ETFA), IEEE, 10 September 2019 (2019-09-10), pages 1722 - 1729, XP033633564, DOI: 10.1109/ETFA.2019.8869263

## Beschreibung

Die Erfindung betrifft einen Sicherheitssystemverbund zur Überwachung eines Bereichs und ein Verfahren zur Überwachung eines solchen Bereichs.

Autonom fahrende Fahrzeuge, insbesondere in Form von Staplern, die in Lagerhallen bzw. Logistikzentren eingesetzt werden können, haben das Potenzial die Effizienz und Sicherheit der Prozesse in solchen Lagerhallen zu verbessern. Diese autonom fahrenden Fahrzeuge sind darauf programmiert, Waren und Materialien selbstständig zu transportieren, zu stapeln und zu sortieren, ohne dass menschliche Fahrer benötigt werden.

Die autonom fahrenden Fahrzeuge können dabei unterschiedlich eingesetzt werden. Es gibt Bereiche, in denen ausschließlich autonom fahrende Fahrzeuge eingesetzt werden und Bereiche, die im normalen Betriebsablauf ebenfalls von Menschen betreten werden, wodurch es zu einem Mischbetrieb kommt. **In** diesen hochdynamischen Umgebungen bewegen sich Menschen und Maschinen auf engem Raum, führen eine Vielzahl von Aufgaben aus, von der Warenannahme über die Lagerung bis hin zum Versand. Eine effiziente und sichere Integration dieser autonom fahrenden Fahrzeuge in diese Umgebungen erfordert fortschrittliche Sensoren und Algorithmen zur Erkennung und Interpretation der Umgebung. Erst dadurch können Kollisionen vermieden und ein reibungsloser Betriebsablauf gewährleistet werden.

Um Unfälle zu vermeiden wird im industriellen Umfeld mit gekapselten Sicherheitskomponenten niedriger Komplexität gearbeitet. Die übliche Sicherheitskette in einem autonom fahrenden Fahrzeug umfassend einen Sicherheitssensor, eine Sicherheitssteuerung und einen sicherem Aktor verwendet überwiegend zertifizierte Sicherheitskomponenten mit fester Funktionen, definiertem Sicherheitsniveau, eindeutig beschriebenem bestimmungsgemäßen Gebrauch und festgelegten Schnittstellen. Die Verwendung eines Sensors und die Logik der Gefährdungsvermeidung wird in diesen Systemen bereits zur Inbetriebnahme festgelegt und bleibt im Betrieb unverändert. Geringfügige dynamische Modifikationen der Sicherheitsfunktion sind aber zum Beispiel in Form von Feldumschaltungen oder Mutingfunktionen möglich. Insgesamt ist allerdings zu sagen, dass die bisherige Sicherheitstechnik statisch ist. Dies bedeutet, dass für den Fall, dass die gewonnenen Sensordaten stimmig sind, die Sicherheitsfunktion (z.B. eine Schutzfeldüberwachung) planmäßig ausgeführt wird. Wenn das System Defizite in den Sensordaten und Inkonsistenzen im erwarteten Ablauf entdeckt, dann wird ein sicherer Zustand eingenommen und ein Eingriff von außen ist erforderlich. In diesem Fall wird autonom fahrende Fahrzeug üblicherweise vollständig gestoppt. Die bekannte Sicherheitstechnik ist in diesem Sinne also sehr starr und durch die strenge Kapselung und die Verwendung zertifizierter Sicherheitskomponenten mit festgelegter Funktion auf Komplexitätsvermeidung ausgerichtet.

Ein solcher Aufbau hat sich über Jahrzehnte durch seine Einfachheit und den modularen Aufbau bewährt. Mit zunehmend komplexeren Automatisierungsabläufen reichen die einfachen Sicherheitslösungen oft nicht mehr aus. Die sehr lokale Ausrichtung der Absicherung (nur an der Gefahrenstelle selbst), der geringe Informationsgehalt der Sensordaten und die fehlende Flexibilität im Hinblick auf veränderliche Prozessbedingungen und Fehlerszenarien setzen diesem klassischen Ansatz Grenzen. Insbesondere die fehlende Resilienz gegenüber Fehlerfällen und Inkonsistenten oder schlechten Sensordaten schränkt die Produktivität bei solchen autonom fahrenden Fahrzeugen stark ein. Bei solchen autonom fahrenden Fahrzeugen ist die Limitierung der sicherheitstechnischen Verwendung durch die Risikoklasse der Komponenten festgelegt. Es ist damit nicht möglich Risiken einer höheren Risikoklasse durch dynamische Hinzunahme weiterer unabhängiger Sicherheitsinformationen abzusichern.

Die US 2019/196480 A1 beschreibt einen Sicherheitssystemverbund, um autonom fahrende Fahrzeuge in einem bestimmten Bereich, wie einer Lagerhalle oder einer Fabrik zu steuern.

Es ist daher die Aufgabe der hier vorliegenden Erfindung eine Möglichkeit zu schaffen, welche die Absicherung komplexer Automatisierungsprozesse in einem weiträumigen Betriebsumfeld für mehrere Gefährdungsszenarien erlaubt. Dabei soll es mit Hilfe dieser Erfindung möglich sein, dynamisch und angepasst auf veränderliche Situationen zu reagieren. Insbesondere soll es möglich sein, den sicheren Betrieb der Automatisierungsprozesse aufrecht zu erhalten, wenn Fehler, Inkonsistenzen oder schlechte Güte die verwendeten Sensordaten beeinträchtigen.

Die Aufgabe wird durch den Sicherheitssystemverbund zur Überwachung eines Bereichs gemäß dem Anspruch 1 und durch das entsprechende Verfahren zur Überwachung dieses Bereichs gemäß dem Anspruch 13 gelöst. In den Ansprüchen 2 bis 12 sind vorteilhafte Weiterbildungen des Sicherheitssystemverbunds angegeben.

Der Sicherheitssystemverbund dient zur Überwachung eines Bereichs, wie beispielsweise einer Lagerhalle oder Fabrik, in welcher sich Objekte, wie autonom fahrende Fahrzeuge und Personen, gemeinsam bewegen. Der Sicherheitssystemverbund umfasst eine zentrale Verarbeitungseinrichtung, die dazu ausgebildet ist, um von einer Vielzahl von Überwachungseinheiten Sensordaten zu empfangen, in denen die im überwachten Bereich von den Überwachungseinheiten erfassten Objekte enthalten sind. Die zentrale Verarbeitungseinrichtung ist dazu ausgebildet, um die empfangenen Sensordaten zu konsolidieren, also zusammenzufügen. Die zentrale Verarbeitungseinrichtung ist weiter dazu ausgebildet, um aus den konsolidierten Sensordaten Objektlisten zu erstellen, wobei die Objektlisten die erfassten Objekte nebst den jeweiligen Objektinformationen enthält. Die zentrale Verarbeitungseinrichtung ist außerdem dazu ausgebildet, um diese Objektlisten an die autonom fahrenden Fahrzeuge zu übertragen.

Es ist besonders vorteilhaft, dass eine Konsolidierung, die auch als Fusionierung bezeichnet werden kann, von verschiedenen Sensordaten durchgeführt wird, um die verschiedenen Objekte in dem zu überwachenden Bereich zu erfassen und entsprechend zu charakterisieren. Es ist außerdem besonders vorteilhaft, dass diese Information, in Form von Objektlisten, an die autonom fahrenden Fahrzeug übertragen wird. In diesem Fall haben die autonom fahrenden Fahrzeuge zusätzliche Informationen, die sie zur sicherheitstechnischen Bewertung von verschiedenen Situationen heranziehen können. Weiterhin erhöht sich der Informationsgehalt sicherheitstechnisch verwendbarer Sensordaten durch den Einsatz der Vielzahl von Überwachungseinheiten deutlich. Das bedeutet, dass die autonom fahrenden Fahrzeuge nicht nur aus dem unmittelbaren Umfeld einer Gefahrenstelle Informationen erhalten, sondern aus einem größeren Bereich (komplette Fabrik, Lagerhalle, usw.) und auf Basis dieser Informationen Gefahrenvermeidung und Produktivitätserhöhung für viele Gefahrenstellen gleichzeitig erreichen.

Bevorzugt wird für jedes Objekt, bei welchem es sich um eine Person, einen stationären Gegenstand, wie beispielsweise eine Palette, oder um ein autonom fahrendes Fahrzeug handeln kann, eine Objektliste angelegt. Jede Objektliste umfasst zumindest eine Objektinformation.

Insbesondere kommt es bei dem erfindungsgemäßen Sicherheitssystemverbund zu einer Trennung zwischen der starren Verbindung von Datengewinnung und Verarbeitung, wie beispielsweise Filterung, auf der einen Seite und Verwendung der Daten auf der anderen Seite. Damit wird die Sicherheitskette flexibler und erlaubt die dynamische Einbindung von Sensordaten je nach Verfügbarkeit und Eignung einerseits und die dynamische Verwendung der Objektinformationen in unterschiedlichen Funktionen, insbesondere innerhalb der autonom fahrenden Fahrzeuge, andererseits. Die Sicherheitssysteme der autonom fahrenden Fahrzeuge können durch Nutzung dieser Objektinformation, die sie über Objektlisten empfangen, flexibler und situationsangepasst auf eine Gefährdungssituation reagieren. Insbesondere können sie gegebenenfalls mit Hilfe solcher redundanter Informationen in einen produktivitätserhaltenden Rückfallbetrieb wechseln, falls Fehler, schlechte Qualität oder inkonsistente Daten in einzelnen Sensorquellen festgestellt werden.

Der erfindungsgemäße Sicherheitssystemverbund erlaubt daher das Konsolidieren, also das Fusionieren, von Informationen (zum Beispiel Sensordaten) aus verschiedenen Quellen. Dadurch lassen sich, insbesondere in den autonom fahrenden Fahrzeugen, höherwertigere und dynamischere Funktionen realisieren als bisher. Weiterhin lässt sich eine vorausschauende Risikovermeidung erreichen. Auch ist es möglich einen zentralen Informationsknotenpunkt, im Form der zentralen Verarbeitungseinrichtung, zu schaffen, welcher beispielsweise in einem Cloudsystem ausgebildet ist. Weiterhin findet eine Produktivitätsverbesserung der autonomen Betriebsabläufe der autonom fahrenden Fahrzeuge statt, weil durch die zusätzlichen Informationen (Objektlisten mit Objektinformationen) eine genauere Steuerung der autonom fahrenden Fahrzeuge möglich ist und dadurch Langsamfahrten dieser autonom fahrenden Fahrzeuge reduziert werden. Insbesondere kann auch die Downtime eines solchen autonom fahrenden Fahrzeugs reduziert werden. Der erfindungsgemäße Sicherheitssystemverbund erlaubt auch eine Verbindung von Sicherheitsfunktionen und Automatisierungsfunktionen, sowie eine Einbindung der entsprechenden Daten in IT/OT-Systeme.

In einer weiteren Ausführungsform umfasst die Objektinformationen eines Objekts eine Position, Größe, Bewegungsrichtung und/oder Bewegungsgeschwindigkeit, Objekt-ID und/oder Objektklasse für das Objekt. Eine Objektklasse gibt an, ob es sich bei dem Objekt beispielsweise um eine Person, ein autonom fahrendes Fahrzeug oder einen stationären Gegenstand handelt. Die Objektinformation kann aus den Sensordaten extrahiert werden, die die Vielzahl von Überwachungseinheiten erzeugen. Die Objektinformation kann über einen längeren Zeitraum oder einmalig erzeugt werden. Die Objektinformation wird durch die Vielzahl von Überwachungseinheiten vorzugsweise fortlaufend aktualisiert. Insbesondere ist die zentrale Verarbeitungseinrichtung dazu ausgebildet, um die Objektinformation aus der Vielzahl der Sensordaten zu extrahieren. So ist die zentrale Überwachungseinheit dazu ausgebildet, um die Sensordaten einzusammeln und insbesondere hinsichtlich ihres Informationsgehaltes, also den in den Sensordaten enthaltenen Objektinformationen, auszuwerten.

In einer weiteren Ausführungsform ist die zentrale Verarbeitungseinrichtung dazu ausgebildet, um die Sensordaten der Vielzahl von Überwachungseinheiten in ein gemeinsames räumliches und zeitliches Koordinatensystem zu überführen. Hierbei handelt es sich insbesondere um eine Möglichkeit zur Konsolidierung der Sensordaten. Das gemeinsame räumliche und zeitliche Koordinatensystem kann den ganzen zu überwachenden Bereich abdecken oder einen Teilbereich.

**In** einer weiteren Ausführungsform ist die zentrale Verarbeitungseinrichtung dazu ausgebildet, um das gemeinsame räumliche und/oder zeitliche Koordinatensystem auf einer Ausgabeeinheit, wie beispielsweise einem Bildschirm und/oder einer Webseite, grafisch darzustellen. Unterschiedliche Objekte können dabei unterschiedlich, beispielsweise durch Farben und/oder Schraffuren und/oder Symbole und/oder Größen, hervorgehoben werden. Insbesondere können Objekte, die einen Vertrauenslevel unterhalb eines Schwellwerts aufweisen, hervorgehoben werden, sodass ein Benutzer, der die Ausgabeeinheit betrachtet, etwaige Gefahrensituationen erkennt.

In einer weiteren Ausführungsform ist die zentrale Verarbeitungseinrichtung dazu ausgebildet, um die empfangenen Sensordaten einer Plausibilitätsprüfung zu unterziehen, indem geprüft wird, ob in den Sensordaten von zumindest zwei Überwachungseinheiten, deren Überwachungsbereiche sich (räumlich) zumindest teilweise überlappen, jeweils ein Objekt enthalten ist und/oder ob in den Sensordaten von zumindest zwei Überwachungseinheiten, deren Überwachungsbereiche aneinander angrenzen, jeweils ein sich bewegendes Objekt zu unterschiedlichen aber aneinander angrenzenden Zeiträumen enthalten ist. Ist dies der Fall, so kann dem Objekt ein höherer Vertrauenslevel zugewiesen werden, als wenn das Objekt lediglich in Sensordaten von nur einer Überwachungseinheit enthalten ist. In letzterem Fall kann optional noch eine Wartungsnachricht ausgegeben werden, dass zumindest eine der Überwachungseinheiten auf ihre korrekte Funktionsweise hin überprüft werden soll. In diesem Fall ist die zentrale Verarbeitungseinrichtung nicht nur dazu ausgebildet, um die Vielzahl der Sensordaten von den Überwachungseinheiten einzusammeln und zu konsolidieren, sondern auch dazu, um die Sensordaten auf ihre Plausibilität hin zu überprüfen.

Erfindungsgemäß umfasst der Sicherheitssystemverbund zumindest eine Bewertungseinrichtung, die dazu ausgebildet ist, um für ein Objekt einen Vertrauenslevel anhand der Sensordaten und/oder der Objektinformationen zu ermitteln. Die Bewertungseinrichtung ist vorzugsweise in der zentralen Verarbeitungseinrichtung angeordnet. In diesem Fall ist die zentrale Verarbeitungseinrichtung nicht nur dazu ausgebildet, um die Vielzahl der Sensordaten von den Überwachungseinheiten einzusammeln und zu konsolidieren, sondern auch, um die Sensordaten hinsichtlich ihres Informationsgehalts auszuwerten und um daraus ein Vertrauenslevel für das jeweilige Objekt zu ermitteln. Dieser Vertrauenslevel wird zusammen mit der Objektliste oder innerhalb der Objektliste an das zumindest eine autonom fahrende Fahrzeug übermittelt. Das autonom fahrende Fahrzeug, welches einen solchen Vertrauenslevel für ein Objekt empfängt, ist dann dazu ausgebildet, um verschiedene Sicherheitsfunktionen anhand dieses Vertrauenslevel bereitzustellen. So kann das autonom fahrende Fahrzeug anhalten, wenn der Vertrauenslevel eines Objekts in seiner Umgebung (innerhalb eines vorbestimmten Abstandsbereichs) niedrig ist bzw. mit unverminderter Geschwindigkeit weiterfahren, wenn der Vertrauenslevel hoch ist, auch wenn sich das entsprechende Objekt in unmittelbarer Nähe (innerhalb eines vorbestimmten Abstandsbereichs) zu dem autonom fahrenden Fahrzeug befindet. Optional kann die Bewertungseinrichtung auch in einem oder mehreren der autonom fahrenden Fahrzeuge angeordnet sein. In dem Fall werden die Objektinformationen von der zentralen Verarbeitungseinrichtung (Fusionskern) ohne Sicherheitsbewertung an die autonom fahrenden Fahrzeuge übertragen. Grundsätzlich ist es besonders vorteilhaft, dass der Sicherheitssystemverbund auch eine sicherheitstechnische Bewertung und Klassifikation der erfassten Objekte durchführt.

In einer weiteren Ausführungsform ist die Bewertungseinrichtung dazu ausgebildet, um das Sicherheitsniveau, den Sicherheitslevel und/oder den Performancelevel anhand des Vertrauenslevels bzw. anhand der Sensordaten und/oder der Objektinformation festzulegen. Dabei gibt es z.B. die Performancelevel a bis e. Die Performancelevel geben die Wahrscheinlichkeit eines gefahrbringenden Ausfalls pro Stunde ((PFHd) 1/h) an. Sie sind in der Norm ISO 13849-1:2006 definiert. Es wird außerdem auf die IEC61508 verwiesen. Ergänzend oder alternativ ist die Bewertungseinrichtung auch dazu ausgebildet, um die Safety-Integrity-Level SIL1 bis SIL4 anhand des Vertrauenslevels bzw. anhand der Sensordaten und/oder der Objektinformation festzulegen.

In einer weiteren Ausführungsform ist die Bewertungseinrichtung dazu ausgebildet, um einen höheren Vertrauenslevel für ein Objekt festzulegen, wenn das Objekt in Sensordaten von zumindest zwei Überwachungseinheiten enthalten ist, die zur selben Zeit erzeugt wurden, und deren Überwachungsfelder sich zumindest teilweise überlappen. In diesem Fall können Objektinformationen wie z.B. Position, Größe, Bewegungsrichtung und Bewegungsgeschwindigkeit anhand der Sensordaten der zumindest zwei Überwachungseinheiten verifiziert werden.

In einer weiteren Ausführungsform ist die Bewertungseinrichtung dazu ausgebildet, um anhand der Güte der Sensordaten und/oder der Objektinformationen den Vertrauenslevel für das Objekt zu ermitteln.

In einer weiteren Ausführungsform hängt die Güte der Sensordaten von physikalischen Eigenschaften der jeweiligen Überwachungseinheit ab, wobei die physikalische Eigenschaften insbesondere das Alter, den Typ, die Fehlerrate, die Ausfallrate, die Streurate, das Messverfahren, den Aufstellort und/oder Konfidenzinformationen der jeweiligen Überwachungseinheit umfassen. Ist Überwachungseinheit erst neu installiert, so ist davon auszugehen, dass die Ausfallrate niedrig ist. Liegen beim Aufstellort gleichmäßige Temperaturen vor und ist Überwachungseinheit vor Niederschlägen geschützt, so ist die Güte höher, als wenn die Überwachungseinheit starken Temperaturschwankungen und Niederschlägen ausgesetzt ist. Eine Überwachungseinheit deren Sensordaten ein gutes Signal-/Rausch-Verhältnis aufweisen hat eine höhere Güte als bei einem schlechteren Signal-/RauschVerhältnis. Ist die Streurate der Sensordaten einer Überwachungseinheit hoch, so ist die Güte niedrig. Ergänzend oder alternativ hängt die Güte der Objektinformationen von der Position, Bewegungsrichtung und/oder Objektklasse ab. Insbesondere ist bedeutsam, ob es sich um eine Person oder ein autonom fahrendes Fahrzeug handelt. So ist bei einem autonom fahrenden Fahrzeug davon auszugehen, dass die Bewegungsrichtung einem bestimmten Bewegungsprofil entsprechen wird, wohingegen dies bei einer Person nicht ohne weiteres angenommen werden kann. Auch ist die Bewegungsgeschwindigkeit eines autonom fahrenden Fahrzeugs konstanter als die Bewegungsgeschwindigkeit einer Person.

In einer weiteren Ausführungsform ist das Vertrauenslevel umso höher, je höher die Güte der Sensordaten ist.

In einer weiteren Ausführungsform umfasst die Bewertungseinrichtung ein KI-Modul. Das KI-Modul ist dazu ausgebildet, um anhand der Sensordaten und/oder der Objektinformationen den Vertrauenslevel für ein Objekt zu bestimmen. Grundsätzlich kann ein solches KI-Modul mit bereits aufgenommenen Sensordaten trainiert werden. So können die Sensordaten von einer Vielzahl von Überwachungseinheiten dem KI-Modul zugeführt werden. Grundsätzlich ist es denkbar, dass dem KI-Modul neben den Sensordaten, auch eine Information mitgegeben wird, um welche Art von Objekten (Personen, autonom fahrende Fahrzeuge, stationäre Objekte) es sich bei den Objekten handelt und wie der Vertrauenslevel diese einzelnen Objekte bewertet wurde. Anhand der Bewegungen der klassifizierten Objekte kann das KI-Modul Unterschiede zwischen einer Person und einem autonom fahrenden Fahrzeug erkennen. Anhand dieser Trainingsdaten kann das trainierte KI-Modul selbstständig einen Vertrauenslevel von anderen Objekten anhand von anderen Sensordaten, die andere Überwachungsdaten aufnehmen, bestimmen. Es ist auch denkbar, dass dem KI-Modul zum Training Szenarien zugeführt werden, die zu ungewöhnlichen Situationen und/oder Unfällen geführt haben.

Erfindungsgemäß umfasst der Sicherheitssystemverbund zumindest ein autonom fahrendes Fahrzeug, wobei das zumindest eine autonom fahrende Fahrzeug dazu ausgebildet ist, um die Objektliste von der zentralen Verarbeitungseinrichtung zu empfangen.

In einer weiteren Ausführungsform ist die zentrale Verarbeitungseinrichtung dazu ausgebildet, um einem autonom fahrenden Fahrzeug lediglich Objektlisten mit denjenigen Objekten nebst den entsprechenden Objektinformation zu übersenden, die sich innerhalb eines bestimmten Abstands zum autonom fahrenden Fahrzeug befinden. In diesem Fall würden dem autonom fahrenden Fahrzeug nicht alle Objektlisten, die alle Objekte in den zu überwachenden Bereich umfassen, übersendet werden.

In einer weiteren Ausführungsform ist das zumindest eine autonom fahrende Fahrzeug dazu ausgebildet, um ohne abzubremsen in einen Kreuzungsbereich einzufahren, wenn Objekte auf der Objektliste, deren Abstand zum Kreuzungsbereich kleiner als ein Abstandsschwellwert ist, einen Vertrauenslevel aufweisen, der größer erster Schwellwert ist. Im Umkehrschluss ist das zumindest eine autonom fahrende Fahrzeug dazu ausgebildet, um mit reduzierter Geschwindigkeit in den Kreuzungsbereich einzufahren oder zu stoppen, wenn Objekte auf der Objektliste, deren Abstand zum Kreuzungsbereich kleiner als ein Abstandsschwellwert ist, einen Vertrauenslevel aufweisen, der kleiner als ein zweiter Schwellwert ist. Der erste und der zweite Schwellwert können identisch oder unterschiedlich sein.

So dient diese vorteilhafte Ausführungsform zur Absicherung von Kreuzungen, insbesondere im industriellen Umfeld. Die Gefährdung besteht darin, dass sich an solchen Kreuzungen die Wege von Personen und autonomen Fahrzeugen überschneiden können. Durch die einschränkte Sicht an solchen Kreuzungen ist es nicht immer möglich, mit den am autonom fahrenden Fahrzeug angebrachten Sicherheitssensoren vorausschauend die Gefährdungslage zu beurteilen. Folglich musste ein autonom fahrendes Fahrzeug bisher die Kreuzung in Schleichfahrt überqueren. Die damit verbundene Einschränkung der Produktivität lässt sich gemäß dieser Ausführungsform vermeiden, weil aus anderen Quellen Sensordaten bereit gestellt werden, mit denen sicher festgestellt werden kann, ob sich eine Person im Kreuzungsbereich befindet oder sich diesem nähert.

Eine Möglichkeit, wie ein solcher Use-Case (Kreuzungseinfahrt) umgesetzt werden kann, ist nachfolgend dargestellt. Mit Hilfe von optischen und/oder funkbasierten Lokalisierungssensoren der Überwachungseinheiten werden die Positionen aller relevanten Objekte, wie beispielsweise der Personen und autonom fahrenden Fahrzeuge im zu überwachenden Bereich erfasst und in einer gemeinsamen Echtzeitkarte zusammengeführt. Unter einer Echtzeitkarte kann ein gemeinsames Eintragen der erfassten Objekte in ein räumliches und zeitliches Koordinatensystem verstanden werden. Hier können z.B. 3D-Sensoren mit Objekttrackingalgorithmen zum Einsatz kommen. In Ergänzung oder alternativ dazu kann auch ein UWB-Lokalisierungssystem mit Transpondern an jeder Person und an jedem Fahrzeug zum Einsatz kommen. Die so gewonnen Objektinformationen in Form von Positionsdaten werden in der zentralen Verarbeitungseinrichtung (Fusionsmodul) zusammengeführt und beispielsweise auf die Genauigkeit, Übereinstimmung, Konfidenzinformationen und/oder a priori Wissen hin überprüft und mit einer Sicherheitsbewertung, also dem Vertrauenslevel, zu jedem Objekt angereichert. Diese "sichere" Objektliste stellt die Datengrundlage für die weitere Verwendung aller angeschlossenen Sicherheitsfunktionen in den jeweiligen autonom fahrenden Fahrzeugen dar. Im Fall der Kreuzungsüberwachung werden beispielsweise verschiedene Fälle unterschieden und sicherheitstechnisch unterschiedlich behandelt. Im Fall guter und konsistenter Messwerte, also wenn beispielsweise die Positionsdaten der optischen Systeme und des UWB-Systems im Rahmen der Toleranzen übereinstimmen, konsistent mit den historischen Trajektorien sind und mit guten Konfidenzwerten geliefert wurden, kann die Sicherheitsfunktion folgende Logik zur Gefährdungsvermeidung verwenden:
- dezentrale Sicherheitssysteme am autonom fahrenden Fahrzeug werden überbrückt. In diesem Fall wird von "Muting" gesprochen.
- Wenn sich keine Person im Kreuzungsbereich befindet, dann kann das autonom fahrende Fahrzeug ohne Reduzierung der Geschwindigkeit die Kreuzung überqueren.
- Bei Annäherung einer Person kann zunächst ein Hinweis an die Person verschickt werden, die Kreuzung vorerst nicht zu betreten (Messaging über Personen-Tag). Dieser Hinweis kann beispielsweise über ein optisches und/oder akustisches System an die Person übersendet werden. Wenn sich die Person daraufhin nicht weiter annähert, überquert das autonom fahrende Fahrzeug die Kreuzung mit voller Geschwindigkeit. Bei Annäherung der Person wird das autonom fahrende Fahrzeug in seiner Geschwindigkeit reduziert und ggf. gestoppt, bis die Person den Kreuzungsbereich verlassen hat.

Wenn sich Objekte im relevanten Kreuzungsumfeld befinden, deren Sicherheitslevel, also Vertrauenslevel, von der zentralen Verarbeitungseinrichtung geringer bewertet wurde, dann wird eine vorsichtigere Absicherungslogik eingesetzt:
- Die dezentralen Sicherheitssysteme des autonom fahrenden Fahrzeugs bleiben aktiv und bei Annäherung an die Kreuzung wird reduzierte Geschwindigkeit und ein Stopp an der Kreuzung gewählt. Die Produktivität ist in diesem Fall eingeschränkt aber ein automatischer Betrieb ist nach wie vor möglich.

Wenn ein Fehler im dezentralen Sicherheitssystem des autonom fahrenden Fahrzeugs vorliegt, würde das im bekannten klassischen Fall zu einem Notstopp des autonom fahrenden Fahrzeugs führen. Der automatisierte Betrieb kann erst wieder aufgenommen werden, wenn durch externe Maßnahmen der Fehler behoben wird. Im hier beschriebenen übergeordneten Sicherheitssystemverbund kann der Betrieb des autonom fahrenden Fahrzeugs durch die redundanten Objektinformationen aus der sicheren Objektliste aufrecht erhalten werden. Solange die hier erzeugten Objektinformationen ausreichende Qualität und Sicherheitseignung (Vertrauenslevel) haben, wird das autonom fahrende Fahrzeug weiter betrieben. Der Fehler kann derweil gemeldet und eine Fehlerbehebung für einen günstigen Zeitpunkt eingeplant werden.

Diese Absicherungslogik kann in Form einer Sicherheitsfunktions-Kaskade für die Kreuzungs-Gefahrenstelle implementiert werden. Ähnlich wie die Logikbausteine in einer programmierbaren Sicherheitssteuerung werden in diesem Fall Sicherheitsfunktionsbausteine mit Hilfe von Fallunterscheidungen und in Abhängigkeit der Güte der Objektinformation so verknüpft, dass der optimale und robuste Betrieb möglich wird.

In einer weiteren Ausführungsform ist das zumindest eine autonom fahrende Fahrzeug dazu ausgebildet, um für den Fall, dass ein Einfahren in den Kreuzungsbereich ohne Abbremsen erfolgt, zumindest ein oder alle Sicherheitssysteme, wie Laserscanner usw., des autonom fahrenden Fahrzeugs zu überbrücken bzw. zu deaktivieren. In diesem Fall kommt es zu keinem Auslösen der Sicherheitssysteme, was zu einem Abbremsen oder einem Notstopp führen würde.

In einer weiteren Ausführungsform ist das zumindest eine autonom fahrende Fahrzeug dazu ausgebildet, in einen LKW und/oder einen Bahnwaggon zu fahren, um Güter auszuladen oder einzuladen, wobei das autonom fahrende Fahrzeug lediglich dann in den LKW und/oder den Bahnwaggon einfährt, wenn in einem Abstandsbereich um den LKW und/oder Bahnwaggon herum, der kleiner als ein Abstandsschwellwert ist, die Objekte auf der Objektliste keine Personen sind und die entsprechende Objektinformation der Objekte einen Vertrauenslevel aufweist, der größer als ein Schwellwert ist, wobei das autonom fahrende Fahrzeug beim Einfahren in den LKW und/oder Bahnwaggon dazu ausgebildet ist, ein oder alle Sicherheitssysteme zu überbrücken bzw. auszuschalten. Dadurch ist gewährleistet, dass das autonom fahrende Fahrzeug auch auf engstem Raum Güter aufnehmen bzw. abladen kann, ohne dass es zu einem Abbremsen oder Notstopp kommt. Diese weitere Ausführungsform kann auch als übergeordnete Fahrzeugabsicherung bezeichnet werden.

Nachfolgend werden weitere Details angegeben, wie diese Fahrzeugabsicherung realisiert werden kann. Hierbei wird angenommen, dass sich ein autonom fahrendes Fahrzeug in verschiedenen Betriebsbereichen einer Fabrik oder einer Lagerhalle aufhält. Beispielsweise nimmt es eine Ladung direkt an einem Übergabepunkt in einem Lkw auf, fährt von dort über einen zentralen Fahrweg der Anlage zu einer abgetrennten Lagerhalle und liefert die aufgenommene Ladung an einen Roboter, insbesondere in Form eines Kommisionierroboters. Je nach Bereich und Situation wird die Absicherung des autonom fahrenden Fahrzeugs ganz unterschiedlich ausgeführt. Die Positionsdaten der oben beschriebenen Echtzeitkarte werden so verwendet, dass zu jedem Zeitpunkt unter Berücksichtigung der aktuellen Position und Umgebung des autonom fahrenden Fahrzeugs bevorzugt die optimale Produktivität erreicht wird.

Wenn sich das autonom fahrende Fahrzeug im Übergabebereich am LKW oder Bahnwaggon befindet, erkennt die übergeordnete Sicherheitsfunktion des autonom fahrenden Fahrzeugs mit Hilfe der abgeleiteten Safe-Point-of-Interest Funktion und der konfigurierten Bereiche, dass die Absicherung in diesem Fall aufgrund beengter Verhältnisse und Verdeckungen ohne die on-board Sicherheitssysteme, beispielsweise der Safetyscanner, erfolgen muss. Hier wird allein auf die verfügbaren Positionsinformationen der Echtzeitkarte zurückgegriffen. Konkret wird durch die zentrale Verarbeitungseinrichtung oder durch das autonom fahrende Fahrzeug, welches die Objektlisten von der zentralen Verarbeitungseinrichtung erhält, überwacht, ob sich Personen im direkten Umfeld und insbesondere im nicht einsehbaren Bereich des LKWs oder Bahnwaggons befinden. Bei fehlenden oder unplausiblen Positionsinformationen, sowie Fehlern wird das autonom fahrende Fahrzeug gestoppt. Wenn gültige Positionsinformationen vorliegen und keine Annäherung festgestellt wurde, dann kann das autonom fahrende Fahrzeug in den Lkw oder den Bahnwaggon einfahren und seine Ladung aufnehmen.

Beim Transfer der Ladung in die Lagerhalle bewegt sich das autonom fahrende Fahrzeug in Bereichen mit starker Frequentierung durch Personen und anderen (autonom fahrenden) Fahrzeugen. In diesem Fall ist die Absicherung mit den on-board Sicherheitssysteme, z.B. der Safetysensoren, des autonom fahrenden Fahrzeugs notwendig. Diese stellen in dem Bereich die primäre Absicherungsfunktion bereit und können gegebenenfalls durch Positionsdaten der Echtzeitkarte ergänzt werden. Dadurch wird eine Erhöhung der Zuverlässigkeit, der Ausweichfunktionen und eine Kreuzungsüberwachung usw. erreicht.

Mit dem Eintreffen in der abgegrenzten Lagerhalle kann die Sicherheitsfunktion wieder auf die positionsbasierte Umfeldüberwachung anhand der empfangenen Objektlisten umgeschaltet werden. Es wird in diesem Beispiel angenommen, dass die Lagerhalle umzäunt, bzw. durch Wände abgegrenzt ist und Personen diesen nur im Wartungsfall oder Fehlerfall betreten. Bei der Einfahrt des autonom fahrenden Fahrzeugs durch eine Schleuse wird anhand der Positionsdaten überwacht, dass kein Personendurchtritt in den autonomen Bereich der Lagerhalle stattfindet. Danach werden die Sicherheitssysteme des autonom fahrenden Fahrzeugs überbrückt (Muting) und das autonom fahrende Fahrzeug bewegt sich im Lagerbereich der Lagerhalle ohne potenziell produktivitätsmindernde Absicherungsmechanismen.

In all diesen Situationen bezieht eine übergeordnete Fahrzeugsicherheitsfunktion die Positionsinformationen und der Objekte in der Umgebung des autonom fahrenden Fahrzeugs über Objektlisten von der zentralen Verarbeitungseinrichtung. Abhängig von den Positionen und ihrer Plausibilität und insbesondere dem Vertrauenslevel wird die Art der in dieser Situation angemessenen Sicherheitsfunktion, mit welcher die Sicherheitssysteme des autonom fahrenden Fahrzeugs betrieben werden, gewählt und die gewählte Funktion auf Basis der Objektinformationen nebst dem Vertrauenslevel ausgeführt.

In einer weiteren Ausführungsform ist das zumindest eine autonom fahrende Fahrzeug dazu ausgebildet, um auch bei einer Fehlfunktion von zumindest einem Sicherheitssysteme, welches zur Überwachung der Umgebung dient, die Fahrt fortzusetzen, wenn die Objekte auf der Objektliste zu keiner Kollision führen und der Vertrauenslevel dieser Objekte größer als ein Schwellwert ist

Das erfindungsgemäße Verfahren dient zur Überwachung eines Bereichs, wie beispielsweise einer Lagerhalle oder einer Fabrik, in welcher sich Objekte, wie autonom fahrende Fahrzeuge und Personen, gemeinsam bewegen. In einem ersten Verfahrensschritt werden von Sensordaten von einer Vielzahl von Überwachungseinheiten empfangen, in denen die im überwachten Bereich von den Überwachungseinheiten erfassten Objekte enthalten sind. In einem zweiten Verfahrensschritt werden die empfangenen Sensordaten konsolidiert. In einem dritten Verfahrensschritt werden Objektlisten aus den konsolidierten Sensordaten erstellt, wobei die Objektlisten die erfassten Objekte nebst den jeweiligen Objektinformationen enthalten. Weiterhin wird ein Vertrauenslevel für ein Objekt anhand der Sensordaten und/oder der Objektinformationen ermittelt. In einem vierten Verfahrensschritt werden diese Objektlisten an die autonom fahrenden Fahrzeuge übertragen. Das autonom fahrende Fahrzeug, welches den Vertrauenslevel für das Objekt empfängt, stellt dann verschiedene Sicherheitsfunktionen anhand des Vertrauenslevel bereit. Dabei ist klar, dass das Übertragen von Objektlisten an die autonom fahrenden Fahrzeuge auch nur die Übertragung von einigen der Objektlisten umfasst.

In einer weiteren Ausführungsform ist das autonom fahrende Fahrzeug ein Stapler bzw. sind die autonom fahrenden Fahrzeuge Stapler.

In einer weiteren Ausführungsform kann die zentrale Verarbeitungseinrichtung auch als Sensorfusionsmodul beschrieben werden und als zentrale Schnittstelle des Sicherheitssystemverbunds fungieren.

In einer weiteren Ausführungsform ist die zentrale Verarbeitungseinrichtung dazu ausgebildet, um Sensordaten von einer Vielzahl von Überwachungseinheiten einzusammeln (zu empfangen), zu plausibilisieren, zu filtern, diese hinsichtlich ihres Informationsgehalts auszuwerten (Erstellen der Objektinformation und des Vertrauenslevels) und zur Ausführung verschiedene Sicherheitsfunktionen an die autonom fahrenden Fahrzeuge zu übersenden.

In einer weiteren Ausführungsform ist die zentrale Verarbeitungseinrichtung dazu ausgebildet, um einem Benutzer eine Information zukommen zu lassen, dass sich ein Objekt mit einem Vertrauenslevel unterhalb eines Schwellwerts in seiner Nähe befindet. Diese Information kann beispielsweise als Funknachricht und/oder optisch, beispielsweise durch eine entsprechende Signaleinrichtung in der Nähe des Benutzers diesem mitgeteilt werden. Auch eine akustische Mitteilung oder taktile Mitteilung (zum Beispiel über Vibrationen) ist denkbar.

In einer weiteren Ausführungsform ist die zentrale Verarbeitungseinrichtung dazu ausgebildet, um ein Objekt mit seinen Objektinformationen aus Sensordaten von unterschiedlichen Überwachungseinheiten zu erstellen. Dadurch ist eine viel präzisere Beschreibung des jeweiligen Objekts möglich. Der Vertrauenslevel ist höher.

In einer weiteren Ausführungsform ist das zumindest eine autonom fahrende Fahrzeug dazu ausgebildet, um in regelmäßigen zeitlichen Abständen die durch die zentrale Verarbeitungseinrichtung aktualisierten Objektlisten zu beziehen, insbesondere von der zentralen Verarbeitungseinrichtung herunterzuladen. Es ist natürlich auch möglich, dass die zentrale Verarbeitungseinrichtung in regelmäßigen zeitlichen Abständen die aktualisierten Objektlisten an das zumindest eine autonom fahrende Fahrzeug übersendet.

In einer weiteren Ausführungsform findet die Übertragung der Objektlisten von der zentralen Verarbeitungseinrichtung zu dem zumindest einen autonom fahrenden Fahrzeug über einen drahtlosen Kommunikationsstandard, wie beispielsweise WLAN, statt.

In einer weiteren Ausführungsform sind die Überwachungseinheiten ausschließlich oder überwiegenden in dem zu überwachenden Bereich angeordnet, insbesondere montiert.

In einer weiteren Ausführungsform sind zumindest zwei Überwachungseinheiten dazu ausgebildet, um Überwachungsfelder zu erzeugen, die sich teilweise überlappen.

In einer weiteren Ausführungsform verläuft durch zumindest einen Teil des zu überwachenden Bereichs eine Fahrstrecke, wobei sich die autonom fahrenden Fahrzeuge zumindest in einem normalen Betriebsmodus, lediglich auf der Fahrstrecke bewegen.

In einer weiteren Ausführungsform sind die Überwachungseinheiten des Sicherheitsverbunds derart angeordnet, dass zumindest 80% oder zumindest 90% der Fahrstrecke stets durch Überwachungsfelder von zumindest zwei Überwachungseinheiten abgedeckt sind.

In einer weiteren Ausführungsform handelt es sich bei den Überwachungseinheiten um optische Lokalisierungssensoren und/oder um funkbasierte Lokalisierungssensoren.

In einer weiteren Ausführungsform umfasst die Objektliste, die an das autonom fahrende Fahrzeug übermittelt wird, auch Objektinformationen, wie z.B. die Position, Bewegungsrichtung und/oder Bewegungsgeschwindigkeit, für eben dieses autonom fahrende Fahrzeug.

In einer weiteren Ausführungsform ist das autonom fahrende Fahrzeug dazu ausgebildet, um anhand von zumindest einer Objektinformation, die das autonom fahrende Fahrzeug über sich selbst erhält, eine Überprüfung der eigenen Messwerte, wie beispielsweise der Geschwindigkeit, Position und/oder Bewegungsrichtung durchzuführen.

In einer weiteren Ausführungsform ist das autonom fahrende Fahrzeug dazu ausgebildet, eine Information an eine übergeordnete Steuereinrichtung, beispielsweise an die zentrale Verarbeitungseinrichtung zu übersenden, in welcher mitgeteilt wird, dass zumindest ein eigener Messwerte nicht mit der empfangenen Objektinformation, die das autonom fahrende Fahrzeug selbst beschreibt, übereinstimmt. In diesem Fall kann beispielsweise eine Wartung geplant und das autonom fahrende Fahrzeug aus dem produktiven Betrieb entfernt werden.

In einer weiteren Ausführungsform handelt es sich bei den Überwachungseinheiten um Kameras bzw. Kamerasensoren, Radarsensoren, 3D-Scanner, funkbasierte Trackingsysteme, Kontaktschleifen im Boden und/oder um Zuhaltevorrichtungen.

Nachfolgend wird die Erfindung rein beispielhaft unter Bezugnahme auf die Zeichnungen beschrieben. Es zeigen:
- Figur 1:: ein Ausführungsbeispiel des erfindungsgemäßen Sicherheitssystemverbunds, der eine Vielzahl von Überwachungseinheiten, eine zentrale Verarbeitungseinrichtung und autonom fahrende Fahrzeuge umfasst;
- Figur 2:: zeigt eine Visualisierung des Sicherheitssystemverbunds, aus welcher hervorgeht wie verschiedene Daten innerhalb des Sicherheitssystemverbunds übertragen werden;
- Figur 3:: zeigt eine Echtzeitkarte des zu überwachenden Bereichs, in der die entsprechenden erfassten Objekte durch die zentrale Verarbeitungseinrichtung eingezeichnet sind, wobei das effizientere Überqueren einer Kreuzung beschrieben wird;
- Figur 4:: zeigt eine Echtzeitkarte des zu überwachenden Bereichs, in der die entsprechenden erfassten Objekte durch die zentrale Verarbeitungseinrichtung eingezeichnet sind, wobei das effizientere Entladen bzw. Beladen eines LKWs beschrieben wird; und
- Figur 5:: ein Verfahren zur Überwachung eines Bereichs, wie beispielsweise einer Lagerhalle oder einer Fabrik.

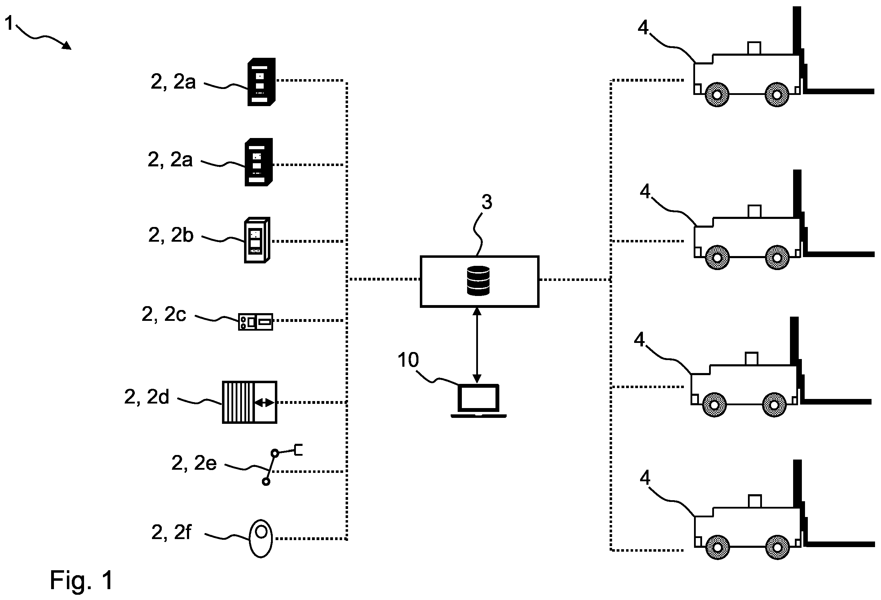

Figur 1 zeigt ein Ausführungsbeispiel des erfindungsgemäßen Sicherheitssystemverbunds 1, der eine Vielzahl von Überwachungseinheiten 2, eine zentrale Verarbeitungseinrichtung 3 und autonom fahrende Fahrzeuge 4 umfasst. Der Sicherheitssystemverbund 1 dient zur Überwachung eines Bereichs 5, wie einer Lagerhalle bzw. Fabrik. Die Vielzahl von Überwachungseinheiten 2 sind dazu ausgebildet, um jeweils einen bestimmten Teil des Bereichs 5 zu überwachen und erzeugen entsprechende Sensordaten 6. Die Überwachungseinheiten 2 sind dazu ausgebildet, um die Sensordaten 6 an die zentrale Verarbeitungseinrichtung 3 zu übertragen. Die zentrale Verarbeitungseinrichtung 3 ist dazu ausgebildet, um die empfangenen Sensordaten 6 zu konsolidieren. Dabei erstellt die zentrale Verarbeitungseinrichtung 3 aus den konsolidierten Sensordaten Objektlisten 7, wobei die Objektlisten die erfassten Objekte 8 beinhalten. Bei diesen Objekten 8 kann es sich um Personen 8a, autonom fahrende Fahrzeuge 4 und stationäre Objekte, wie beispielsweise Paletten 8b handeln. Für jedes Objekt gibt es entsprechende Objektinformationen, die ebenfalls Inhalt der Objektliste 7 sind. Objektinformationen können die Position, Größe, Bewegungsrichtung und/oder Bewegungsgeschwindigkeit, Objekt-ID und/oder Objektklasse des Objekts sein. Die entsprechenden Objektlisten 7 werden dann an die autonom fahrenden Fahrzeuge 4 übertragen.

Bei den Überwachungseinheiten 2 kann es sich um unterschiedliche Geräte handeln, die dazu ausgebildet sind, um Sensordaten 6 zu erzeugen, in denen die Objekte 8 enthalten sind. In Figur 1 handelt es sich bei den Überwachungseinheiten 2 um Kameras 2a, Radarsensoren 2b, Zuhaltevorrichtungen 2c, Türsysteme 2d, Roboter 2e und funkbasierte Trackingsysteme 2f, die beispielsweise an Personen und/oder Fahrzeugen angebracht sind.

Bei den Sensordaten 6 kann es sich um Rohdaten handeln, die die jeweiligen Überwachungseinheiten 2 erzeugen. Es ist auch möglich, dass die Überwachungseinheiten 2 die Sensordaten 6 bereits aufbereiten, sodass die zentrale Verarbeitungseinrichtung 3 diese Daten leichter verarbeiten kann. Die Sensordaten 6 können in unterschiedlicher Form vorliegen. Handelt es sich bei der Überwachungseinheit 2 um eine Kamera 2a so kann das Kamerabild direkt in Form von Sensordaten 6 an die zentrale Verarbeitungseinrichtung 3 übertragen werden. Es ist auch denkbar, dass die Kamera 2a das Objekt 8 im Bild selbst detektiert und lediglich die Position des Objekts 8 im Bild bzw. im überwachten Bereich 5 in Form von Koordinaten an die zentrale Verarbeitungseinrichtung 3 überträgt. Selbiges kann auch gelten, wenn es sich bei der Überwachungseinheit 2 um einen Radarsensor 2b handelt. Handelt es sich bei der Überwachungseinheit 2 um eine Zuhaltevorrichtung 2c, so kann die Betätigung der Zuhaltevorrichtung 2c detektiert und in Form von Sensordaten an die zentrale Verarbeitungseinrichtung 3 übertragen werden. Die zentrale Verarbeitungseinrichtung 3 weiß dann, dass eine Person 8a oder ein autonom fahrendes Fahrzeug 4 aus dem Türbereich, der mit der Zuhaltevorrichtung 2c abgesichert ist, austritt bzw. eintritt. Selbiges gilt auch für den Fall, dass es sich bei der Überwachungseinheit 2 um ein (automatisches) Türsystem 2d handelt. Öffnet und schließt der entsprechende Türflügel, so kann dies als Indikator dafür gesehen werden, dass eine Person 8a oder ein autonom fahrendes Fahrzeug 4 den Türbereich betritt oder verlässt. Handelt es sich bei der der Überwachungseinheit 2 um eine Maschine, wie beispielsweise ein Roboter 2e, so können die entsprechenden Sensordaten 6, die von dieser Maschine an die zentrale Verarbeitungseinrichtung 3 übertragen werden, den Zustand dieser Maschine wiedergeben. Ist ein Durchlauf bzw. Arbeitsablauf der Maschine erfolgt, so kann diese Information als Indiz dafür gesehen werden, dass beispielsweise in Kürze eine Person 8a bzw. ein autonom fahrendes Fahrzeug 4 kommt, um die hergestellten Güter abzuholen bzw. zu verarbeitende Materialien zu liefern. Bei der Überwachungseinheit 2 kann es sich auch um ein funkbasiertes Trackingsystem 2f handeln, welches beispielsweise an Fahrzeugen oder Personen 8a angebracht wird, um deren Position in dem zu überwachenden Bereich 5 sicher zu erfassen. Bei der Überwachungseinheit 2 kann es sich auch um ein autonom fahrendes Fahrzeug 4 handeln, welches entsprechende Sensoren, wie zum Beispiel LIDAR-Sensoren, aufweist, um damit die Umgebung abzutasten.

Die einzelnen Überwachungseinheiten 2 können über eine Kabelverbindung oder drahtlos mit der zentralen Verarbeitungseinrichtung 3 verbunden sein.

Die zentrale Verarbeitungseinrichtung 3 kann beispielsweise ein zentrales Computersystem sein, welches zentral oder dezentral (zum Beispiel in der Cloud) angeordnet ist.

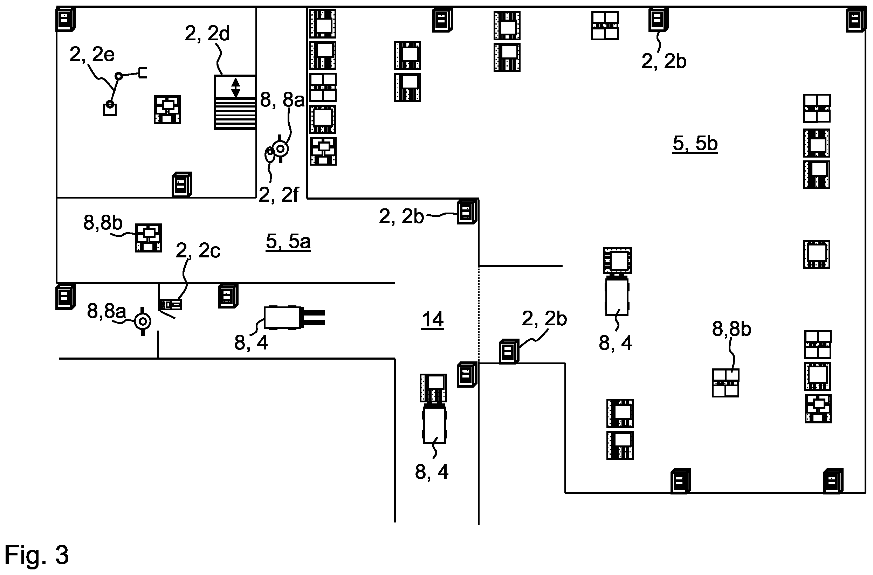

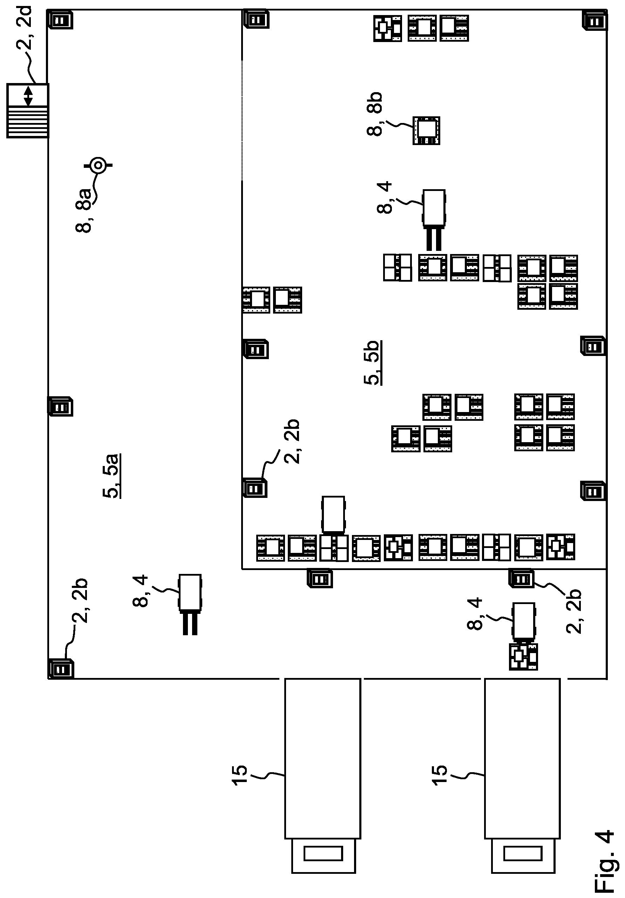

Die zentrale Verarbeitungseinrichtung 3 ist dazu ausgebildet, um die Sensordaten 6 der Vielzahl von Überwachungseinheiten 2 in ein gemeinsames räumliches und zeitliches Koordinatensystem 9 zu überführen. Ein solches gemeinsames Koordinatensystem 9, in Form einer Echtzeitkarte, ist in den Figuren 3 und 4 dargestellt.

Das gemeinsame Koordinatensystem 9 kann auch noch auf einem Bedienterminal 10 dargestellt werden, welches mit der zentralen Verarbeitungseinrichtung 3 verbunden ist. Über das Bedienterminal 10 können auch Steuerbefehle an die zentrale Verarbeitungseinrichtung 3 und weiter vorzugsweise an die mit der zentralen Verarbeitungseinrichtung 3 verbundenen Überwachungseinheiten 2 und/oder autonom fahrenden Fahrzeuge 4 übermittelt werden.

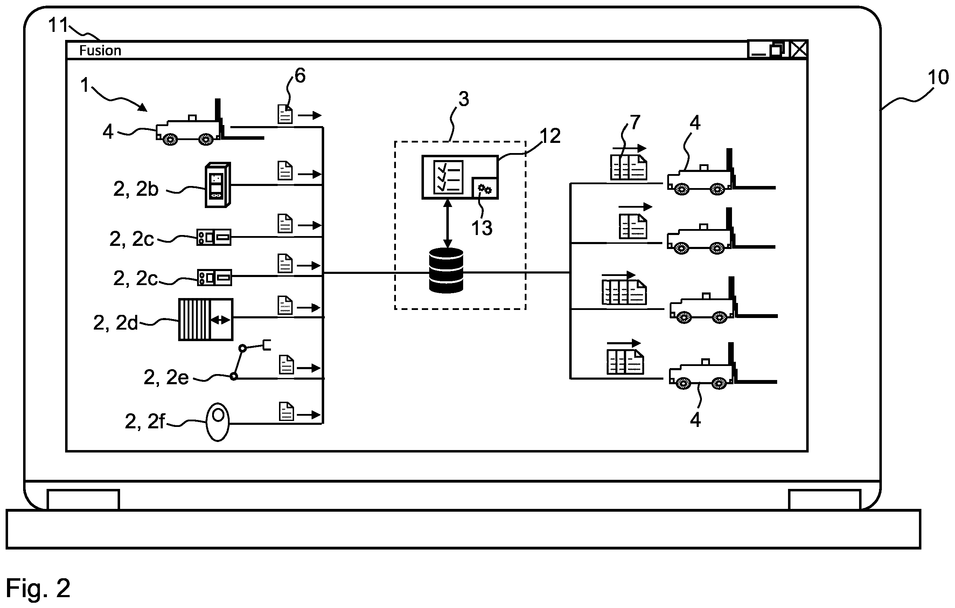

Figur 2 zeigt eine Visualisierung des Sicherheitssystemverbunds 1, aus welcher hervorgeht wie verschiedene Daten innerhalb des Sicherheitssystemverbunds 1 übertragen werden. Die Visualisierung findet in diesem Fall auf dem Bedienterminal 10 statt. Auf dem Bedienterminal 10 ist eine Anwendung 11 gestartet, um die zentrale Verarbeitungseinrichtung 3 zu steuern. Die Sensordaten 6 werden von den einzelnen Überwachungseinheiten 2 an die zentrale Verarbeitungseinrichtung 3 übertragen. Dort werden die Sensordaten 6 konsolidiert, wobei die zentrale Verarbeitungseinrichtung 3 dazu ausgebildet ist, die einzelnen Objekte 8 in den Sensordaten 6 bzw. den konsolidierten Sensordaten zu erfassen und entsprechende Objektlisten 7 zu erstellen. Die Objektlisten 7 umfassen die jeweiligen Objekte 8 zusammen mit ihren Objektinformationen. Die Objektlisten 7 werden dann an die autonom fahrenden Fahrzeuge 4 übertragen. Nicht jedes autonom fahrende Fahrzeug 4 muss dieselben Objektlisten 7 erhalten. Eine Objektliste 7 enthält zumindest ein Objekt 8 mit zumindest einer Objektinformation für dieses Objekt 8.

Bevorzugt ist die zentrale Verarbeitungseinrichtung 3 auch dazu ausgebildet, um die empfangenen Sensordaten 6 einer Plausibilitätsprüfung zu unterziehen. Überlappen sich Überwachungsbereiche von zumindest zwei Überwachungseinheiten 2, so muss ein Objekt 8 in beiden Sensordaten 6 detektiert werden. Andernfalls sind die Sensordaten 6 nicht plausibel. Nichts anderes gilt auch dann, falls Überwachungsbereiche von zwei Überwachungseinheiten 2 aneinander angrenzen. Bewegt sich ein Objekt 8 durch beide Überwachungsbereiche nacheinander, so muss dieses Objekt 8, wenn auch zeitlich versetzt, in beiden Sensordaten 6 der Überwachungseinheiten 2 sichtbar sein.

In Figur 2 ist auch dargestellt, dass der Sicherheitssystemverbund 1 eine Bewertungseinrichtung 12 umfasst. In diesem Fall ist die Bewertungseinrichtung 12 Teil der zentralen Verarbeitungseinrichtung 3. Die Bewertungseinrichtung 12 ist dazu ausgebildet, um für ein Objekt 8 einen Vertrauenslevel anhand der Sensordaten 6 und/oder der Objektinformationen zu ermitteln. Die Bewertungseinrichtung 12 ist dazu ausgebildet, um einen höheren Vertrauenslevel für ein Objekt 8 festzulegen, wenn das Objekt 8 in Sensordaten 6 von zumindest zwei Überwachungseinheiten 2 enthalten ist, die zur selben Zeit erzeugt wurden, und deren Überwachungsfelder sich zumindest teilweise überlappen, bzw. wenn das Objekt 8 in Sensordaten 6 von unterschiedlichen Überwachungseinheiten 2 zeitlich versetzt auftaucht, deren Überwachungsfelder nebeneinander angeordnet sind.

In Figur 2 ist zudem dargestellt, dass die Bewertungseinrichtung 12 ein KI-Modul 13 umfasst. Das KI-Modul 13 ist dazu ausgebildet, um anhand der Sensordaten 6 und/oder der Objektinformationen den Vertrauenslevel für ein Objekt 8 zu bestimmen. Die zentrale Verarbeitungseinrichtung 3 ist dazu ausgebildet, um den Vertrauenslevel der Objektliste für das entsprechende Objekt 8 hinzuzufügen bzw. diesen Vertrauenslevel direkt der Objektinformation für das Objekt 8 hinzuzufügen. Das autonom fahrende Fahrzeug 4 ist dann dazu ausgebildet, um in Abhängigkeit der Objekte 8 auf der Objektliste und deren Vertrauenslevel in verschiedenen Situationen auf den Vertrauenslevel angepasst zu reagieren.

Figur 3 zeigt eine Echtzeitkarte des zu überwachenden Bereichs 5, in der die entsprechenden erfassten Objekte 8 durch die zentrale Verarbeitungseinrichtung 3 eingezeichnet sind. Bevorzugt ist für jedes Objekt 8 ein bestimmter Vertrauenslevel ermittelt. Der Bereich 5 umfasst einen normalen Bereich 5a und einen abgeschotteten Bereich 5b. Beide Bereiche 5a, 5b sind durch eine gepunktete Linie voneinander getrennt. In dem normalen Bereich 5a halten sich autonom fahrende Fahrzeuge 4 und Personen 8a im normalen Betrieb gleichzeitig auf. In dem abgeschotteten Bereich 5b hatten sich im normalen Betrieb lediglich autonom fahrende Fahrzeuge 4 auf. Sowohl im normalen Bereich 5a als auch im abgeschotteten Bereich 5b gibt es eine Vielzahl von Überwachungseinheiten 2. Die autonom fahrenden Fahrzeuge 4 sind dazu ausgebildet, um im abgeschotteten Bereich 5b ihre Sicherheitssysteme, wie beispielsweise einen Laserscanner, zu deaktivieren (stromlosschalten, muten usw.) und sich lediglich auf die Objektinformationen der Objektlisten 7 zu verlassen, welche den autonom fahrenden Fahrzeugen 4 über die zentrale Verarbeitungseinrichtung 3 übermittelt werden. Dadurch können Paletten 8b besonders dicht zueinander angeordnet werden, weil die Sicherheitssysteme der autonom fahrenden Fahrzeuge 4 keine Notauslösung bewirken. In dem normalen Bereich 5a sind die Sicherheitssysteme dagegen vorzugsweise aktiviert. In dem normalen Bereich 5a ist weiterhin ein Kreuzungsbereich 14 dargestellt. Der Kreuzungsbereich 14 und die Umgebung des Kreuzungsbereichs 14 werden durch entsprechende Überwachungseinheiten 2 überwacht. Das autonom fahrende Fahrzeug 4, welches in Figur 2 von unten kommend in den Kreuzungsbereich 14 hineinfährt, hat eine Objektliste 7 mit relevanten Objekten 8 im Kreuzungsbereich 14 (Objekte innerhalb eines bestimmten Abstands zum Kreuzungsbereich 14) erhalten. Der Vertrauenslevel der Objekte 8 im Kreuzungsbereich 14 ist größer als ein Schwellwert, sodass das von unten kommende autonom fahrende Fahrzeug 4 sicher ermitteln kann, dass der Kreuzungsbereich 14 frei von anderen Objekten 8 ist. Das von unten kommende autonom fahrende Fahrzeug 4 ist daher dazu ausgebildet, um ohne Reduktion der Geschwindigkeit in den Kreuzungsbereich 14 einzufahren und optional sogar noch seine Sicherheitssysteme zu deaktivieren. Für den Fall, dass der Vertrauenslevel unterhalb eines (z.B. anderen) Schwellwerts ist, würde das von unten kommende autonom fahrende Fahrzeug 4 mit einer reduzierten Geschwindigkeit in den Kreuzungsbereich 14 einfahren oder gar vor dem Einfahren stoppen.

Figur 4 zeigt eine weitere Echtzeitkarte eines zu überwachenden Bereichs 5, in der die entsprechenden erfassten Objekte 8 durch die zentrale Verarbeitungseinrichtung 3 eingezeichnet sind. In diesem Ausführungsbeispiel wird erläutert, wie autonom fahrende Fahrzeuge 4 einen Lkw 15 effizienter entladen bzw. beladen können. Die autonom fahrenden Fahrzeuge 4 haben von der zentralen Verarbeitungseinrichtung 3 wiederum eine Objektliste 7 erhalten, in welcher eine Vielzahl von Objekten 8 nebst den entsprechenden Objektinformationen enthalten sind. Für jedes Objekt 8 ist wiederum ein Vertrauenslevel gebildet. Der zu überwachende Bereich 5 umfasst wiederum einen normalen Bereich 5a und einen abgeschotteten Bereich 5b. Weiterhin wird der zu überwachende Bereich 5 von einer Vielzahl von Überwachungseinheiten 2 überwacht. Zumindest eine dieser Überwachungseinheiten 2 ist derart angeordnet, dass sie in einen zu entladenen Lkw 15 hinein sehen kann. Die entsprechenden Sensordaten 6 dieser zumindest einen Überwachungseinheit 2 können dann Objekte 8 enthalten, die sich im zu entladenen oder zu beladenen Lkw 15 befinden und/oder direkt in dessen Nähe. Diese Objekte 8 können durch die zentrale Verarbeitungseinrichtung 3 wiederum einer Objektliste 7 hinzugefügt werden. Ebenfalls kann ein entsprechender Vertrauenslevel für diese Objekte 8 gebildet (z.B. anhand der Qualität mit welcher die entsprechende Überwachungseinheit arbeitet) und ebenfalls der Objektliste 7 hinzugefügt werden. Das autonom fahrende Fahrzeug 4 empfängt diese Objektliste 7 und ist dazu ausgebildet, um in den Lkw 15 einzufahren, wenn sich aus der Objektliste 7 die Information ergibt, dass sich innerhalb eines bestimmten Abstandsschwellwerts zum Lkw 15 keine Personen 8a befinden und der Vertrauenslevel für die detektierten Objekte 8 größer als ein Schwellwert ist. In diesem Fall ist das autonom fahrende Fahrzeug 4 dazu ausgebildet, um in den Lkw 15 einzufahren und dabei ein oder alle seine Sicherheitssysteme, wie beispielsweise einen Laserscanner, zu überbrücken bzw. auszuschalten. Dadurch kommt es zu keinem Notauslösung der Sicherheitssysteme des autonom fahrenden Fahrzeugs 4 aufgrund der beengten Platzverhältnisse innerhalb des LKWs 15.

Die zentrale Verarbeitungseinrichtung 3 ist auch dazu ausgebildet, um eine Objektliste 7 an ein mobiles Endgerät, wie ein Smartphone, einer Person 8a zu übersenden. Die Person 8a hat dann Echtzeitdaten bezüglich der aktuellen Position der jeweiligen Objekte 8 in dem zu überwachenden Bereich 5.

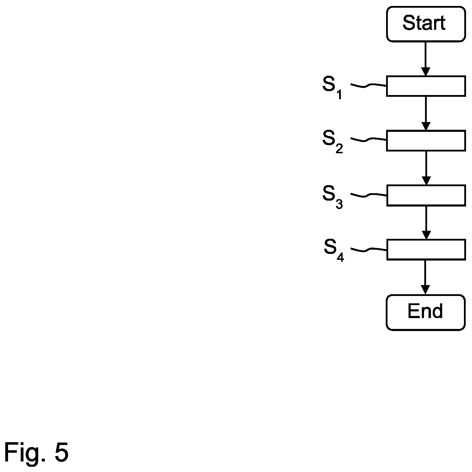

Figur 5 beschreibt ein Verfahren zur Überwachung eines Bereichs 5, wie beispielsweise einer Lagerhalle oder einer Fabrik. In einem ersten Verfahrensschritt S₁ werden von Sensordaten 6 von einer Vielzahl von Überwachungseinheiten 2 empfangen, in denen die im überwachten Bereich 5 von den Überwachungseinheiten 2 erfassten Objekte 8 enthalten sind. In einem zweiten Verfahrensschritt S₂ werden die empfangenen Sensordaten 6 konsolidiert. In einem dritten Verfahrensschritt S₃ werden Objektlisten 7 aus den konsolidierten Sensordaten erstellt, wobei die Objektlisten 7 die erfassten Objekte 8 nebst den jeweiligen Objektinformationen enthalten. In einem vierten Verfahrensschritt S₄ werden diese Objektlisten an die autonom fahrenden Fahrzeuge 4 übertragen.

Die Erfindung ist nicht auf die beschriebenen Ausführungsbeispiele beschränkt. Der Schutzbereich wird durch die anhängenden Ansprüche bestimmt.

### Bezugszeichenliste

| | |
|---|---|
| Sicherheitssystemverbund | 1 |
| Überwachungseinheit | 2 |
| Kamera | 2a |
| Radarsensor | 2b |
| Zuhaltevorrichtung | 2c |
| Türsystem | 2d |
| Roboter | 2e |
| Funkbasiertes Trackingsystem | 2f |
| Zentrale Verarbeitungseinrichtung | 3 |
| Autonom fahrende Fahrzeuge | 4 |
| Bereich | 5 |
| Normaler Bereich | 5a |
| Abgeschotteter Bereich | 5b |
| Sensordaten | 6 |
| Objektlisten | 7 |
| Objekte | 8 |
| Personen | 8a |
| Paletten | 8b |
| Koordinatensystem | 9 |
| Bedienterminal | 10 |
| Anwendung | 11 |
| Bewertungseinrichtung | 12 |
| KI-Modul | 13 |
| Kreuzungsbereich | 14 |
| LKW | 15 |
| Verfahrensschritte | S₁, S₂, S₃, S₄ |

## Patentansprüche

1. Ein Sicherheitssystemverbund (1) zur Überwachung eines Bereichs (5), wie
beispielsweise einer Lagerhalle oder Fabrik, in welchem sich Objekte (8), wie
autonom fahrende Fahrzeuge (4) und Personen (8a), gemeinsam bewegen, wobei der Sicherheitssystemverbund (1) eine zentrale Verarbeitungseinrichtung (3) umfasst, die dazu ausgebildet ist, um von einer Vielzahl von Überwachungseinheiten (2) Sensordaten (6) zu empfangen, in denen die im überwachten Bereich (5) von den Überwachungseinheiten (2) erfassten Objekte (8) enthalten sind,
wobei die zentrale Verarbeitungseinrichtung (3) dazu ausgebildet ist, um die empfangenen Sensordaten (6) zu konsolidieren,
**dadurch gekennzeichnet, dass**
die zentrale Verarbeitungseinrichtung (3) dazu ausgebildet ist, um aus den konsolidierten Sensordaten Objektlisten (7) zu erstellen, wobei die Objektlisten (7) die erfassten Objekte (8) nebst den jeweiligen Objektinformationen enthält, und um diese Objektlisten (7) an die autonom fahrenden Fahrzeuge (4) zu übertragen,
wobei der Sicherheitssystemverbund (1) eine Bewertungseinrichtung (12) umfasst, die dazu ausgebildet ist, um für ein Objekt (8) einen Vertrauenslevel anhand der Sensordaten (6) und/oder der Objektinformationen zu ermitteln,
wobei der Sicherheitssystemverbund (1) zumindest ein autonom fahrendes Fahrzeug (4) umfasst, wobei das zumindest eine autonom fahrende Fahrzeug (4) dazu ausgebildet ist, um die Objektliste (7) von der zentralen Verarbeitungseinrichtung (3) zu empfangen,
und
wobei das autonom fahrende Fahrzeug, welches einen solchen Vertrauenslevel für ein Objekt empfängt, dann dazu ausgebildet ist, um verschiedene Sicherheitsfunktionen anhand dieses Vertrauenslevel bereitzustellen.

2. Sicherheitssystemverbund (1) nach Anspruch 1,
wobei die Objektinformationen eines Objekts (8) eine Position, Größe, Bewegungsrichtung und/oder Bewegungsgeschwindigkeit, Objekt-ID und/oder Objektklasse für das Objekt (8) umfasst.

3. Sicherheitssystemverbund (1) nach Anspruch 1 oder 2,
wobei die zentrale Verarbeitungseinrichtung (3) dazu ausgebildet ist, um die Sensordaten (6) der Vielzahl von Überwachungseinheiten (2) in ein gemeinsames räumliches und zeitliches Koordinatensystem zu überführen.

4. Sicherheitssystemverbund (1) nach einem der vorstehenden Ansprüche, wobei die zentrale Verarbeitungseinrichtung (3) dazu ausgebildet ist, um die empfangenen Sensordaten (6) einer Plausibilitätsprüfung zu unterziehen, indem geprüft wird, ob:
a) in den Sensordaten (6) von zumindest zwei Überwachungseinheiten (2), deren Überwachungsbereiche sich zumindest teilweise überlappen, jeweils ein Objekt (8) enthalten ist; und/oder
b) in den Sensordaten (6) von zumindest zwei Überwachungseinheiten (2), deren Überwachungsbereiche aneinander angrenzen, jeweils ein sich bewegendes Objekt (8) zu unterschiedlichen aber aneinander angrenzenden Zeiträumen enthalten ist.

5. Sicherheitssystemverbund (1) nach einem der vorstehenden Ansprüche, wobei die Bewertungseinrichtung (12) dazu ausgebildet ist, um einen höheren Vertrauenslevel für ein Objekt (8) festzulegen, wenn das Objekt (8) in Sensordaten (6) von zumindest zwei Überwachungseinheiten (2) enthalten ist, die zur selben Zeit erzeugt wurden, und deren Überwachungsfelder sich zumindest teilweise überlappen.

6. Sicherheitssystemverbund (1) nach einem der vorstehenden Ansprüche, wobei die Bewertungseinrichtung (12) dazu ausgebildet ist, um anhand der Güte der Sensordaten (6) und/oder der Objektinformationen den Vertrauenslevel für das Objekt (8) zu ermitteln.

7. Sicherheitssystemverbund (1) nach Anspruch 6,
wobei die Güte der:
a) Sensordaten (6) von physikalischen Eigenschaften der jeweiligen Überwachungseinheit (2) abhängt, wobei die physikalische Eigenschaften insbesondere das Alter, den Typ, die Fehlerrate, die Ausfallrate, die Streurate, das Messverfahren, den Aufstellort und/oder Konfidenzinformationen der jeweiligen Überwachungseinheit (2) umfassen; und/oder
b) Objektinformationen von der Position, Bewegungsrichtung und/oder Objektklasse, insbesondere ob es sich um eine Person (8a) oder ein autonom fahrendes Fahrzeug (4) handelt, abhängt.

8. Sicherheitssystemverbund (1) nach einem der vorstehenden Ansprüche, wobei die Bewertungseinrichtung (12) ein KI-Modul (13) umfasst und wobei das KI-Modul (13) dazu ausgebildet ist, um anhand der Sensordaten (6) und/oder der Objektinformationen den Vertrauenslevel für ein Objekt (8) zu bestimmen.

9. Sicherheitssystemverbund (1) nach einem vorstehenden Ansprüche, wobei das zumindest eine autonom fahrende Fahrzeug (4) dazu ausgebildet ist, um:
a) ohne abzubremsen in einen Kreuzungsbereich (14) einzufahren, wenn Objekte (8) auf der Objektliste (7), deren Abstand zum Kreuzungsbereich (14) kleiner als ein Abstandsschwellwert ist, einen Vertrauenslevel aufweisen, der größer erster Schwellwert ist; und
b) mit reduzierter Geschwindigkeit in den Kreuzungsbereich (14) einzufahren oder zu stoppen, wenn Objekte (8) auf der Objektliste (7), deren Abstand zum Kreuzungsbereich (14) kleiner als ein Abstandsschwellwert ist, einen Vertrauenslevel aufweisen, der kleiner als ein zweiter Schwellwert ist.

10. Sicherheitssystemverbund (1) nach Anspruch 9,
wobei das zumindest eine autonom fahrende Fahrzeug (4) dazu ausgebildet ist, um für den Fall, dass ein Einfahren in den Kreuzungsbereich (14) ohne Abbremsen erfolgt, zumindest ein oder alle Sicherheitssysteme des autonom fahrenden Fahrzeugs (4) zu überbrücken bzw. zu deaktivieren.

11. Sicherheitssystemverbund (1) nach einem der vorstehenden Ansprüche, wobei das zumindest eine autonom fahrende Fahrzeug (4) dazu ausgebildet ist, in einen LKW (15) und/oder einen Bahnwaggon zu fahren, um Güter auszuladen oder einzuladen, wobei das autonom fahrende Fahrzeug (4) lediglich dann in den LKW (15) und/oder den Bahnwaggon einfährt, wenn in einem Abstandsbereich um den LKW (15) und/oder Bahnwaggon herum, der kleiner als ein Abstandsschwellwert ist, die Objekte (8) auf der Objektliste (7):
a) keine Personen sind;
b) die entsprechende Objektinformation der Objekte (8) einen Vertrauenslevel aufweist, der größer als ein Schwellwert ist;
wobei das autonom fahrende Fahrzeug (4) beim Einfahren in den LKW (15) und/oder Bahnwaggon dazu ausgebildet ist, ein oder alle Sicherheitssysteme zu überbrücken bzw. auszuschalten.

12. Sicherheitssystemverbund (1) nach einem der vorstehenden Ansprüche, wobei das zumindest eine autonom fahrende Fahrzeug (4) dazu ausgebildet ist, um auch bei einer Fehlfunktion von zumindest einem Sicherheitssystem, welches zur Überwachung der Umgebung dient, die Fahrt fortzusetzen, wenn die Objekte (8) auf der Objektliste (15) zu keiner Kollision führen und der Vertrauenslevel dieser Objekte (8) größer als ein Schwellwert ist.

13. Verfahren zur Überwachung eines Bereichs (5), wie beispielsweise einer Lagerhalle oder einer Fabrik, in welchem sich Objekte (8), wie autonom fahrende Fahrzeuge (4) und Personen (8a), gemeinsam bewegen, mit mindestens einem autonom fahrenden Fahrzeug, mit den folgenden Verfahrensschritten:
- Empfangen (S₁) von Sensordaten (6) von einer Vielzahl von Überwachungseinheiten (2), in denen die im überwachten Bereich (5) von den Überwachungseinheiten (2) erfassten Objekte (8) enthalten sind;
- Konsolidieren (S₂) der empfangenen Sensordaten (6); **dadurch gekennzeichnet, dass** das Verfahren ferner die folgenden Schritte umfasst:
- Erstellen (S₃) von Objektlisten (7) aus den konsolidierten Sensordaten, wobei die Objektlisten (7) die erfassten Objekte (8) nebst den jeweiligen Objektinformationen enthalten;
- Ermitteln eines Vertrauenslevels für ein Objekt (8) anhand der Sensordaten (6) und/oder der Objektinformationen;
- Übertragen (S₄) dieser Objektlisten (7) an die autonom fahrenden Fahrzeuge (4);
- Breitstellen von verschiedenen Sicherheitsfunktionen anhand des Vertrauenslevels durch das autonom fahrende Fahrzeug, welches den Vertrauenslevel für das Objekt empfängt.

## Claims

1. A safety system assembly (1) for monitoring a zone (5), such as a warehouse or a factory, in which zone (5) objects (8), such as autonomously driving vehicles (4) and persons (8a), move together, wherein the safety system assembly (1) comprises a central processing device (3) which is configured to receive sensor data (6) from a plurality of monitoring units (2), in which sensor data (6) the objects (8) detected in the monitored zone (5) by the monitoring units (2) are included,
wherein the central processing device (3) is configured to consolidate the received sensor data (6),
**characterized in that**
the central processing device (3) is configured to create object lists (7) from the consolidated sensor data, with the object lists (7) including the detected objects (8) together with the respective object information, and to transmit these object lists (7) to the autonomously driving vehicles (4),
wherein the safety system assembly (1) comprises an assessment device (12) which is configured to determine a confidence level for an object (8) based on the sensor data (6) and/or the object information,
wherein the safety system assembly (1) comprises at least one autonomously driving vehicle (4), wherein the at least one autonomously driving vehicle (4) is configured to receive the object list (7) from the central processing device (3),
and
wherein the autonomously driving vehicle, which receives such a confidence level for an object, is then configured to provide different safety functions based on this confidence level.

2. A safety system assembly (1) according to claim 1,
wherein the object information of an object (8) comprises a position, size, direction of movement and/or speed of movement, object ID and/or object class for the object (8).

3. A safety system assembly (1) according to claim 1 or 2,
wherein the central processing device (3) is configured to convert the sensor data (6) of the plurality of monitoring units (2) into a common spatial and temporal coordinate system.

4. A safety system assembly (1) according to any one of the preceding claims, wherein the central processing device (3) is configured to subject the received sensor data (6) to a plausibility check by checking whether:
a) a respective object (8) is included in the sensor data (6) from at least two monitoring units (2) whose monitoring zones at least partly overlap; and/or
b) a respective moving object (8) is included, in different but mutually adjoining time periods, in the sensor data (6) from at least two monitoring units (2) whose monitoring zones adjoin one another.

5. A safety system assembly (1) according to any one of the preceding claims, wherein the assessment device (12) is configured to define a higher confidence level for an object (8) if the object (8) is included in sensor data (6) from at least two monitoring units (2) that were produced at the same time and whose monitoring fields at least partly overlap.

6. A safety system assembly (1) according to any one of the preceding claims, wherein the assessment device (12) is configured to determine the confidence level for the object (8) based on the quality of the sensor data (6) and/or of the object information.

7. A safety system assembly (1) according to claim 6,
wherein the quality of the:
a) sensor data (6) depends on physical properties of the respective monitoring unit (2), wherein the physical properties in particular comprise the age, the type, the error rate, the failure rate, the scatter rate, the measurement method, the installation location and/or confidence information of the respective monitoring unit (2);
and/or
b) object information depends on the position, direction of movement and/or object class, in particular whether it is a person (8a) or an autonomously driving vehicle (4).

8. A safety system assembly (1) according to any one of the preceding claims, wherein the assessment device (12) comprises an Al module (13) and wherein the Al module (13) is configured to determine the confidence level for an object (8) based on the sensor data (6) and/or the object information.

9. A safety system assembly (1) according to any one of the preceding claims, wherein the at least one autonomously driving vehicle (4) is configured to:
a) drive into an intersection zone (14) without braking if objects (8) on the object list (7) whose distance from the intersection zone (14) is smaller than a distance threshold value have a confidence level which is greater than the first threshold value; and
b) to drive into the intersection zone (14) at a reduced speed or to stop if objects (8) on the object list (7) whose distance from the intersection zone (14) is smaller than a distance threshold value have a confidence level which is smaller than a second threshold value.

10. A safety system assembly (1) according to claim 9,
wherein the at least one autonomously driving vehicle (4) is configured to bypass or deactivate at least one or all of the safety systems of the autonomously driving vehicle (4) in the event that a driving into the intersection zone (14) without braking takes place.

11. A safety system assembly (1) according to any one of the preceding claims, wherein the at least one autonomously driving vehicle (4) is configured to drive into a truck (15) and/or a railroad car in order to unload or load goods, wherein the autonomously driving vehicle (4) only drives into the truck (15) and/or the railroad car if, in a distance range around the truck (15) and/or the railroad car that is smaller than a distance threshold value, the objects (8) on the object list (7):
a) are not persons;
b) the corresponding object information of the objects (8) has a confidence level which is greater than a threshold value;
wherein the autonomously driving vehicle (4) is configured to bypass or switch off one or all of the safety systems when driving into the truck (15) and/or the railroad car.

12. A safety system assembly (1) according to any one of the preceding claims, wherein the at least one autonomously driving vehicle (4) is configured, even in the event of a malfunction of at least one safety system which serves to monitor the environment, to continue travelling if the objects (8) on the object list (15) do not lead to a collision and the confidence level of these objects (8) is greater than a threshold value.

13. A method of monitoring a zone (5), such as a warehouse or a factory, in which zone (5) objects (8), such as autonomously driving vehicles (4) and persons (8a), move together, using at least one autonomously driving vehicle, comprising the following method steps:
- receiving (S₁) sensor data (6) from a plurality of monitoring units (2), in which sensor data (6) the objects (8) detected in the monitored zone (5) by the monitoring units (2) are included;
- consolidating (S₂) the received sensor data (6);
**characterized in that** the method further comprises the following steps:
- creating (S₃) object lists (7) from the consolidated sensor data, wherein the object lists (7) include the detected objects (8) together with the respective object information;
- determining a confidence level for an object (8) based on the sensor data (6) and/or the object information;
- transmitting (S₄) these object lists (7) to the autonomously driving vehicles (4);
- providing different safety functions based on the confidence level by means of the autonomously driving vehicle which receives the confidence level for the object.

## Revendications

1. Système composite de sécurité (1) destiné à surveiller une zone (5), telle qu'un entrepôt ou une usine, dans laquelle des objets (8), tels que des véhicules autonomes (4) et des personnes (8a), se déplacent ensemble, le système composite de sécurité (1) comprenant un dispositif de traitement central (3) conçu pour recevoir des données de capteur (6) provenant d'une pluralité d'unités de surveillance (2), données dans lesquelles sont contenus les objets (8) détectés dans la zone surveillée (5) par les unités de surveillance (2),
le dispositif de traitement central (3) étant conçu pour consolider les données de capteur (6) reçues,
**caractérisé en ce que**
le dispositif de traitement central (3) est conçu pour créer des listes d'objets (7) à partir des données de capteur consolidées, les listes d'objets (7) contenant les objets détectés (8) ainsi que les informations respectives sur les objets, et pour transmettre ces listes d'objets (7) aux véhicules autonomes (4),
le système composite de sécurité (1) comprenant un dispositif d'évaluation (12) conçu pour déterminer un niveau de confiance d'un objet (8) sur la base des données de capteur (6) et/ou des informations sur les objets,
le système composite de sécurité (1) comprenant au moins un véhicule autonome (4), ledit au moins un véhicule autonome (4) étant conçu pour recevoir la liste d'objets (7) provenant du dispositif de traitement central (3),
et
le véhicule autonome qui reçoit un tel niveau de confiance d'un objet étant alors conçu pour mettre à disposition différentes fonctions de sécurité sur la base de ce niveau de confiance.

2. Système composite de sécurité (1) selon la revendication 1,
dans lequel les informations sur un objet (8) comprennent une position, une taille, une direction de mouvement et/ou une vitesse de mouvement, un identifiant d'objet et/ou une classe d'objet pour l'objet (8).

3. Système composite de sécurité (1) selon la revendication 1 ou 2,
dans lequel le dispositif de traitement central (3) est conçu pour convertir les données de capteur (6) de la pluralité d'unités de surveillance (2) en un système de coordonnées spatiales et temporelles commun.

4. Système composite de sécurité (1) selon l'une des revendications précédentes,
dans lequel le dispositif de traitement central (3) est conçu pour soumettre les données de capteur (6) reçues à un contrôle de plausibilité en vérifiant si :
a) les données de capteur (6) d'au moins deux unités de surveillance (2) dont les zones de surveillance se chevauchent au moins partiellement contiennent un objet (8) respectif ; et/ou
b) les données de capteur (6) d'au moins deux unités de surveillance (2) dont les zones de surveillance sont contiguës contiennent un objet (8) respectif en mouvement à des moments différents mais contigus.

5. Système composite de sécurité (1) selon l'une des revendications précédentes,
dans lequel le dispositif d'évaluation (12) est conçu pour attribuer un niveau de confiance plus élevé à un objet (8) si cet objet (8) est contenu dans les données de capteur (6) d'au moins deux unités de surveillance (2) qui ont été générées au même moment et dont les champs de surveillance se chevauchent au moins partiellement.

6. Système composite de sécurité (1) selon l'une des revendications précédentes,
dans lequel le dispositif d'évaluation (12) est conçu pour déterminer le niveau de confiance de l'objet (8) sur la base de la qualité des données de capteur (6) et/ou des informations sur l'objet.

7. Système composite de sécurité (1) selon la revendication 6, dans lequel la qualité
a) des données de capteur (6) dépend des propriétés physiques de l'unité de surveillance (2) respective, les propriétés physiques comprenant en particulier l'âge, le type, le taux d'erreur, le taux de défaillance, le taux de dispersion, le procédé de mesure, le lieu d'installation et/ou les informations de confiance de l'unité de surveillance (2) respective ;
et/ou
b) des informations sur l'objet dépend de la position, de la direction de mouvement et/ou de la classe d'objet, en particulier dépend de savoir s'il s'agit d'une personne (8a) ou d'un véhicule autonome (4).

8. Système composite de sécurité (1) selon l'une des revendications précédentes,
dans lequel le dispositif d'évaluation (12) comprend un module d'intelligence artificielle (13) et le module d'intelligence artificielle (13) est conçu pour déterminer le niveau de confiance d'un objet (8) sur la base des données de capteur (6) et/ou des informations sur l'objet.

9. Système composite de sécurité (1) selon l'une des revendications précédentes,
dans lequel ledit au moins un véhicule autonome (4) est conçu pour :
a) entrer dans une zone d'intersection (14) sans freiner si des objets (8) figurant sur la liste d'objets (7), dont la distance par rapport à la zone d'intersection (14) est inférieure à une valeur seuil de distance, présentent un niveau de confiance supérieur à une première valeur seuil; et
b) entrer dans la zone d'intersection (14) à vitesse réduite ou s'arrêter si des objets (8) figurant sur la liste d'objets (7), dont la distance par rapport à la zone d'intersection (14) est inférieure à une valeur seuil de distance, présentent un niveau de confiance inférieur à une deuxième valeur seuil.

10. Système composite de sécurité (1) selon la revendication 9, dans lequel ledit au moins un véhicule autonome (4) est conçu pour, dans le cas où il entre dans la zone d'intersection (14) sans freiner, contourner ou désactiver au moins un ou tous les systèmes de sécurité du véhicule autonome (4).

11. Système composite de sécurité (1) selon l'une des revendications précédentes,
dans lequel ledit au moins un véhicule autonome (4) est conçu pour entrer dans un camion (15) et/ou dans un wagon de chemin de fer afin de décharger ou de charger des marchandises, et le véhicule autonome (4) n'entre dans le camion (15) et/ou dans le wagon de chemin de fer que si, dans une zone de distance autour du camion (15) et/ou du wagon de chemin de fer qui est inférieure à une valeur seuil de distance, les objets (8) figurant sur la liste d'objets (7)
a) ne sont pas des personnes ;
b) les informations correspondantes sur les objets (8) présentent un niveau de confiance supérieur à une valeur seuil ;
le véhicule autonome (4) étant conçu pour contourner ou désactiver un ou tous les systèmes de sécurité lorsqu'il entre dans le camion (15) et/ou dans le wagon de chemin de fer.

12. Système composite de sécurité (1) selon l'une des revendications précédentes,
dans lequel ledit au moins un véhicule autonome (4) est conçu pour poursuivre sa route même en cas de dysfonctionnement d'au moins un système de sécurité servant à surveiller l'environnement, si les objets (8) figurant sur la liste d'objets (15) ne provoquent pas de collision et si le niveau de confiance de ces objets (8) est supérieur à une valeur seuil.

13. Procédé de surveillance d'une zone (5), telle qu'un entrepôt ou une usine, dans laquelle des objets (8), tels que des véhicules autonomes (4) et des personnes (8a), se déplacent ensemble, avec au moins un véhicule autonome, comprenant les étapes suivantes consistant à :
- recevoir (S₁) des données de capteur (6) provenant d'une pluralité d'unités de surveillance (2) dans lesquelles sont contenus les objets (8) détectés dans la zone surveillée (5) par les unités de surveillance (2) ;
- consolider (S₂) les données de capteur (6) reçues ;
**caractérisé en ce que** le procédé comprend en outre les étapes suivantes consistant à :
- créer (S₃) des listes d'objets (7) à partir des données de capteur consolidées, les listes d'objets (7) contenant les objets détectés (8) ainsi que les informations respectives sur les objets ;
- déterminer un niveau de confiance d'un objet (8) sur la base des données de capteur (6) et/ou des informations sur les objets ;
- transmettre (S₄) ces listes d'objets (7) aux véhicules autonomes (4) ;
- mettre à disposition différentes fonctions de sécurité sur la base du niveau de confiance par le véhicule autonome qui reçoit le niveau de confiance de l'objet.
